# DEMANDE DE BREVET EUROPEEN

(11) **EP 0 704 155 A2**
(43) Date de publication de la demande: **03.04.1996**
(21) Numéro de dépôt: 95402167.1
(22) Date de dépôt: 27.09.1995
(51) Int. Cl.: A01K 5/00, A01F 29/00, A01F 25/20

(54) **Goulotte articulée, notamment pour désileuse**

(30) Priorité: 28.09.1994 FR 9411592
(71) Demandeur: AGRAM, F-93200 Saint Denis (FR)
(72) Inventeur: Lecomte, Stéphane, F-14350 Saint Martin des Besaces (FR)
(74) Mandataire: Cabinet Pierre HERRBURGER

(57) **Abrégé**

a) Goulotte articulée, notamment pour désileuse.
b) goulotte caractérisée en ce qu'elle est munie d'une partie mobile, télescopique (15,14,) montée pivotante sur l'embase (11), et d'un second moyen de guidage de mouvement télescopique, ce second moyen se composant d'une liaison par galet (18) et glissière (17) portés par la partie fixe (12) et la partie mobile (15) de la goulotte,
   - un moyen de commande (19) reliant la partie fixe et la partie mobile pour déployer ou rentrer la partie mobile (15) par rapport à la partie fixe (12).

## Description

La présente invention concerne une goulotte articulée de désileuse comprenant une embase de rotation autour de laquelle la goulotte peut pivoter autour d'un axe vertical, et portant un élément fixe de goulotte.

On connaît déjà une telle goulotte de désileuse. Cette goulotte articulée est montée sur une embase de rotation. La goulotte elle-même, qui pivote autour de l'axe de cette embase, est formée d'éléments à section en U, articulés les uns aux autres et constituant une goulotte déformable, à la manière d'une queue de langouste. L'extrémité du dernier élément est reliée à un bras pivotant commandé par un vérin. Le pivotement de ce bras permet de modifier la courbure de la goulotte ainsi formée pour réaliser une goulotte de très faible rayon de courbure, pour déposer les produits sortant de la goulotte à proximité de la goulotte, ou de rayon de courbure important, pour projeter au loin les produits sortant de la goulotte.

Une telle goulotte articulée présente l'inconvénient, du fait même de sa structure, d'être très courte si bien qu'elle ne présente pas une bonne directivité ce qui est très gênant pour la projection à distance.

Pour la projection à proximité, comme les « écailles » qui constituent la goulotte sont très rapprochées et très cintrées, il y a risque de bourrage aux interstices entre les différentes écailles ce qui constitue également un inconvénient grave.

La présente invention a pour but de remédier à ces inconvénients et se propose de créer une goulotte articulée, notamment destinée à des désileuses, pour dévier ou diriger des produits de nature très différentes comme des morceaux de paille, c'est-à-dire des produits très secs et non collants ou des produits de désilage qui sont par nature mous et souvent collants, de manière à éviter tout bourrage ou colmatage de la goulotte en cours de travail tout en assurant une excellente directivité tant à proximité qu'à distance.

A cet effet, l'invention concerne une goulotte articulée caractérisée en ce qu'elle est munie d'une partie mobile, télescopique montée pivotante sur l'embase, et d'un second moyen de guidage de mouvement télescopique, ce second moyen se composant d'une liaison par galet et glissière portés par la partie fixe et la partie mobile de la goulotte,
- un moyen de commande notamment un vérin reliant la partie fixe et la partie mobile pour déployer ou rentrer la partie mobile par rapport à la partie fixe.

La goulotte articulée selon l'invention présente l'avantage d'être constituée d'une structure télescopique extrêmement simple, à un ou éventuellement deux éléments l'un par rapport à l'autre. Cette liaison télescopique permet un glissement commandé de l'élément mobile par rapport à l'élément fixe, donnant une directivité précise du jet de produits.

Le mouvement télescopique permet également de raccourcir au maximum la goulotte articulée, par exemple pour la mettre en position de transport.

Suivant une autre caractéristique de l'invention, l'extrémité de l'élément mobile de la goulotte comporte un élément complémentaire ou casquette, jouant le rôle de déflecteur pour diriger précisément les produits à la sortie de la goulotte.

La présente invention sera décrite ci-après de manière plus détaillée à l'aide des dessins annexés dans lesquels :
- la figure 1 est une vue d'ensemble de côté, très schématique, d'une désileuse équipée d'une goulotte articulée selon l'invention, la goulotte étant en position rétractée,
- la figure 2 est une vue partielle de la goulotte selon l'invention en position déployée,
- les figures 3A, 3B montrent une variante de réalisation d'une goulotte selon l'invention avec la goulotte rétractée à la figure 3A et déployée à la figure 3B,
- la figure 4 est une coupe transversale de la goulotte télescopique de la figure 3.

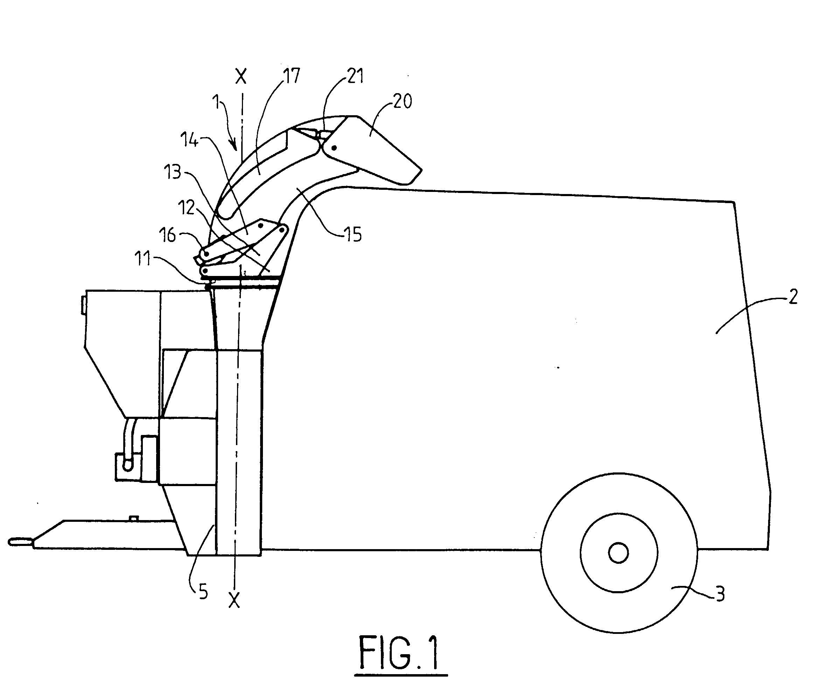

Selon la figure 1, l'invention concerne une goulotte articulée en forme de goulotte télescopique 1 équipant une désileuse. Cette désileuse elle-même est constituée d'une benne 2 portée par des roues 3, éventuellement relevables. L'extrémité arrière de la benne peut être équipée d'un dispositif de chargement qui permet de prendre les produits dans un silo pour charger la benne 2. Cette extrémité de la benne 1 est ouverte. Par contre, l'autre extrémité de la benne, fermée, est équipée d'une turbine 5 qui reçoit les produits de la benne convoyés par exemple par un tapis convoyeur constituant le fond de la benne 2. La turbine projette les produits à travers la goulotte 1. Cette goulotte peut pivoter autour de son axe vertical XX et s'allonger télescopiquement pour changer de courbure et diriger à volonté le jet de produits non seulement en orientation autour de l'axe XX mais aussi en distance.

Dans la position représentée à la figure 1, la goulotte télescopique 1 est montrée repliée, et située dans le plan de symétrie de l'appareil, c'est-à-dire le plan parallèle à celui de la figure 1.

La goulotte 1 se compose d'une embase 11 constituée par exemple par une couronne à billes autour de laquelle peut pivoter la goulotte 1 proprement dite. Cette embase porte solidairement une partie fixe 12 (c'est-à-dire seulement rotative autour de l'embase) de goulotte ainsi que deux bras latéraux 13. Ces bras latéraux 13 portent par l'intermédiaire de bielles 14, la seconde partie 15 de la goulotte ou partie mobile. Cette partie mobile 15 est reliée à la bielle 14 notamment par l'articulation 16. La partie mobile 15 de la goulotte 1 est guidée également par rapport à la partie fixe (cachée à la figure 1) par une glissière 17 située de chaque côté et coopérant avec un galet 18 porté par la partie fixe 12.

Un vérin 19 relié d'une part à la partie fixe 12 par des moyens non représentés et, d'autre part, à l'articulation 16, commande le mouvement télescopique de la partie mobile 15.

A l'avant, la partie mobile 15 comporte un déflecteur ou casquette 20 monté pivotant et commandé dans son mouvement de pivotement par un vérin 21. Ce déflecteur 20 articulé et orientable en bout de la partie mobile 15 constitue un autre moyen d'orientation du jet de produits.

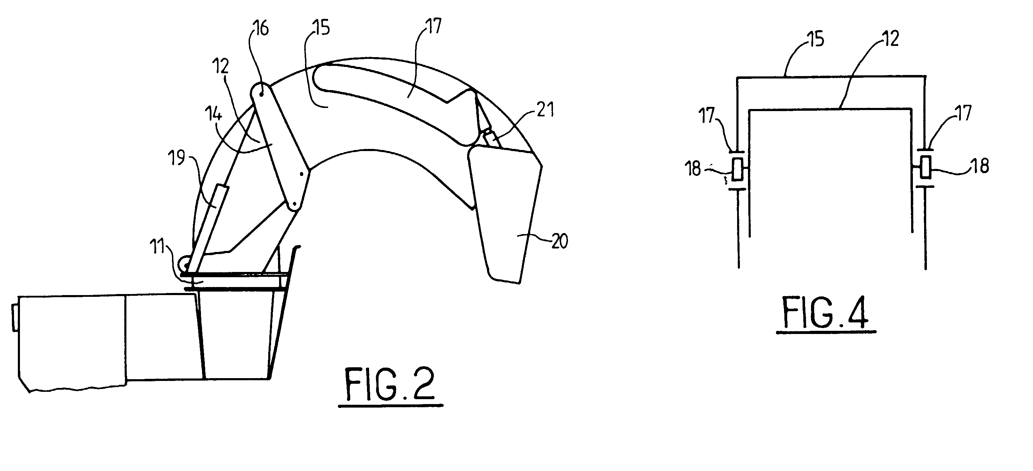

La figure 1 montre la goulotte 1 en position repliée alors que la figure 2 la montre en position déployée. Dans cette position, la partie mobile 15 est complètement déployée et prolonge la partie fixe 12.

Le déflecteur 20 est rabattu mais il pourrait également être mis dans le prolongement de la partie mobile 15.

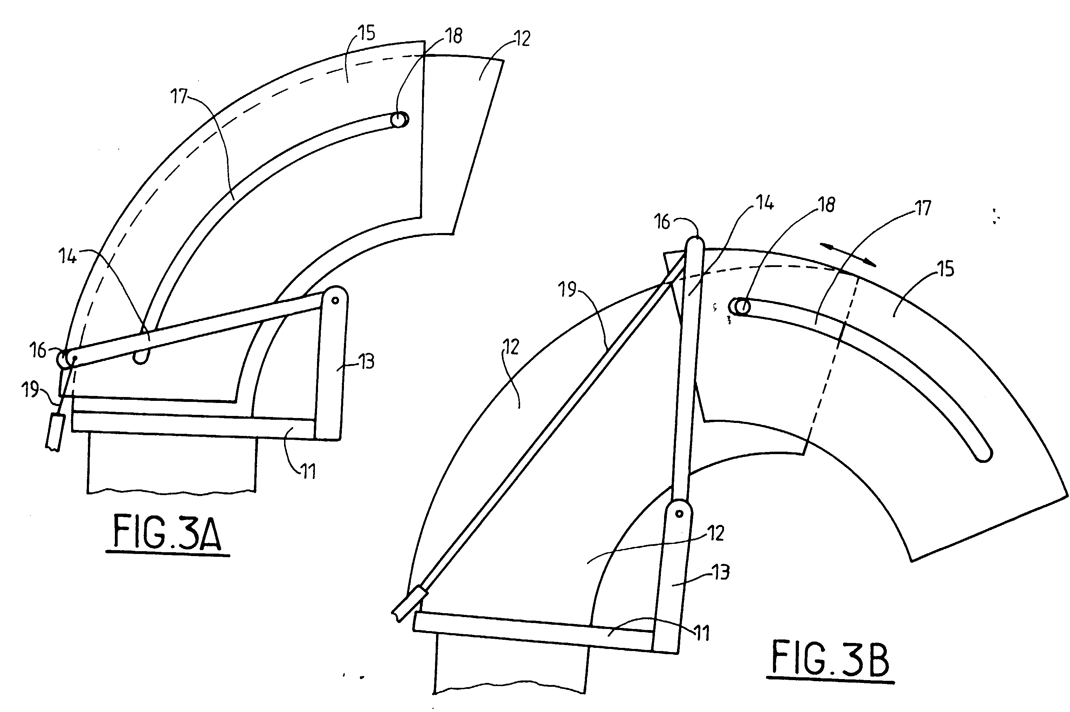

Les figures 3A, 3B montrent schématiquement le principe de l'invention. Dans cette figure, la partie fixe 12 est également portée par une embase 11 reliée à la partie du carter de la turbine, non représentée.

La goulotte comprend également une partie mobile 15 reliée à la partie fixe 12 comme cela a été décrit, d'une part par une bielle 14 de forme plus simple que celle de la bielle 14 des figures 1 et 2. Cette bielle 14 est articulée au bras 13 solidaire de l'embase 11. La bielle 14 est représentée dans la position déployée (figure 3B) ou dans sa position rentrée (figure 3A), lorsque l'élément mobile 15 est rabattu complètement au-dessus de la partie fixe 12 de la goulotte comme cela apparaît à la figure 1.

Les figures 3A, 3B et 4 montrent également le second moyen de guidage de la partie mobile 15 par le galet 18 solidaire de la partie fixe 12 et logé dans la glissière 17 de la partie mobile 15. En fait, de part et d'autre, de manière symétrique par rapport au plan du dessin, il y a un galet 18 et une glissière 17.

La figure 4 montre cette particularité de structure.

De manière générale, bien que la description ci-dessus ait été faite dans le cas non limitatif d'une désileuse à benne relevable, l'invention s'applique dans les mêmes conditions à toute désileuse et notamment autoportée ou automotrice, équipée ou d'un dispositif de chargement ou dont l'extrémité est fermée ou ouverte.

De même, bien qu'usuellement les mouvements soient commandés par des vérins, d'autres moyens peuvent être envisagés.

Les mouvements télescopiques et de rotation décrits ci-dessus peuvent être conjugués en une séquence programmée au moment du mélange pour permettre une bonne répartition des produits dans la benne.

## Revendications

1. Goulotte articulée, notamment pour désileuse, comprenant une embase de rotation (11) autour de laquelle la goulotte peut pivoter autour d'un axe vertical, et portant un élément fixe de goulotte (12), goulotte caractérisée en ce qu'elle est munie d'une partie mobile montée pivotante sur l'embase (11), télescopique (15, 14) et d'un moyen de guidage de mouvement télescopique se composant d'une liaison par galet (18) et glissière (17) portés par la partie fixe (12) et la partie mobile (15) de la goulotte,
- un moyen de commande (19) reliant la partie fixe et la partie mobile pour déployer ou rentrer la partie mobile (15) par rapport à la partie fixe (12).

2. Goulotte articulée selon la revendication 1, caractérisée en ce que l'extrémité libre de la partie mobile (15) comporte un déflecteur (20) articulé sur cette extrémité.

3. Goulotte articulée selon la revendication 2, caractérisée en ce que le déflecteur (20) est commandé par rapport à la partie mobile (15) par un vérin (21).

4. Goulotte articulée selon la revendication 1, caractérisée en ce que le moyen de commande (19) est un vérin.

5. Goulotte articulée selon la revendication 1, caractérisée en ce qu'elle est mobile et son mouvement est commandé selon une programmation de mouvements correspondant à une séquence préétablie.
